# EUROPEAN PATENT SPECIFICATION

(11) **EP 1 980 477 B1**
(45) Date of publication and mention of the grant of the patent: **06.01.2010**
(21) Application number: 08251338.3
(22) Date of filing: 08.04.2008
(51) Int. Cl.: B62J 35/00, B62J 9/00, B62K 11/00, B62J 37/00, F02D 19/08, F02D 41/00, F02D 19/06, F02D 19/00

(54) **Motorcycle**
Motorrad
Motocyclette

(30) Priority: 09.04.2007 JP 2007102144; 28.02.2008 JP 2008048576
(43) Date of publication of application: 15.10.2008
(73) Proprietor: Yamaha Hatsudoki Kabushiki Kaisha, Iwata-shi, Shizuoka 438-8501 (JP)
(72) Inventor: Nakamura, Michihisa, Shizuoka-ken 438-8501 (JP); Kaku, Junichi, Shizuoka-ken 438-8501 (JP)
(74) Representative: Harris, Ian Richard

(56) References cited:
- JP-A- 2001 106 147
- US-A- 4 385 676
- US-A1- 2004 182 378

## Description

### FIELD

The present invention relates to a motorcycle, and more particularly to an arrangement of an exhaust gas sensor in a case that the engine is configured for operation with different types of fuels.

### BACKGROUND

So-called "flex fuel vehicles" (hereinafter referred to as "FFV") that allows the operation with different types of fuels have been put to practical use. A flex fuel engine mounted on this type of vehicle has a function to allow the operation with either the gasoline or the ethanol, and also to allow the operation with composite fuels of gasoline and ethanol at any mixing ratio (see, for example, SAE2005-01-3777)

Here, it is known that a feedback control of the fuel injection amount is performed in the case of FFV based on the output of the exhaust gas sensor mounted on the exhaust pipe to respond to the change in the fuel composition, and then the fuel composition is learned based on the controlled amount described above, so that the engine can be started and operated even when the feedback control is not performed, by injecting and supplying the amount of fuel according to the results of the learning.

Ethanol or the composite fuels of gasoline and ethanol described above has a higher water content than ordinary fuel composed only of gasoline, and therefore water tends to accumulate in the lower part of the exhaust pipe. On the other hand, some of the exhaust gas sensors used for the feedback control (hereinafter referred to as O₂ feedback control) described above are heated by a built-in heater simultaneously with the activation of the ignition switch, so that the detection of the exhaust gas properties can be initiated immediately after the engine start. Thus, depending on the layout structure of this type of exhaust gas sensor, it can be hit by a heat shock caused by the water in the exhaust pipe splashing onto the exhaust gas sensor, especially at the time of engine start.

US 4, 385, 676 relates to a fuel feed system for carburetors motorcycles. The motorcycle is able to operate with different fuels. US 2004/0182378 relates to an apparatus for estimating the fuel properties of an internal combustion engine. A controller is adapted to estimate the concentration of a fuel component, for example, alcohol, in a fuel mixture.

The present invention seeks to provide a motorcycle in which a heat shock on an exhaust gas sensor used for the O₂ feedback control described above can be suppressed.

### SUMMARY

An aspect of the present invention provides a motorcycle including a body frame, an engine mounted on the body frame, and an exhaust device connected to the engine, in which the engine is configured to allow the operation with different types of fuels, the exhaust device has an exhaust pipe connected to the engine and extending rearward after passing below the engine, the exhaust pipe having a vertical pipe section extending in the vertical direction, an exhaust gas sensor is disposed in the exhaust pipe for detecting the properties of the exhaust gas to identify the type of fuel, and the exhaust gas sensor is disposed in the vertical pipe section at a higher position than a lowest part of the exhaust pipe.

Here, the "lowest part" of the exhaust pipe means the part where the moisture generated by the combustion of the aforementioned composite fuel of ethanol and gasoline, for instance, is condensed into water and accumulated. In addition, the "higher position than the lowest part" means the position higher than the accumulated water level, and specifically, the pipe section rising to the upstream or to the downstream from the lowest part is preferable. Note that the upper wall of the pipe including the lowest part described above is included in the higher position described above.

The exhaust gas sensor can be disposed higher than the lowest part of the exhaust pipe, and accordingly, the water accumulated in the lowest part of the exhaust pipe is prevented from directly splashing onto the exhaust gas sensor. As a result, especially when the engine is started with the exhaust gas sensor being pre-heated, the splashing of the water onto the exhaust gas sensor can be prevented, which in turn can prevent the generation of heat shock on the exhaust gas sensor.

### BRIEF DESCRIPTION OF THE DRAWINGS

Embodiments of the invention are described hereinafter, by weay of example only, with reference to the attached drawings.
FIG. 1 is a right side view of a motorcycle according to an embodiment.
FIG. 2 shows an arrangement of an auxiliary tank according to the embodiment.
FIG. 3 is a side view of the auxiliary tank.
FIG. 4 is a cross-sectional side view, showing an arrangement of the exhaust gas sensor according to the embodiment.
FIG. 5 is a cross-sectional plan view, showing an arrangement of the exhaust gas sensor.
FIG. 6 is a chart, showing a mixing state of the fuel relative to the elapsed time for describing the effect of the embodiment.
FIG. 7 is a chart, showing a mixing state of the fuel relative to the elapsed time for describing the effect of the embodiment.
FIG. 8 is a cross-sectional front views showing a modification example for the location of the exhaust gas sensor.

### DETAILED DESCRIPTION

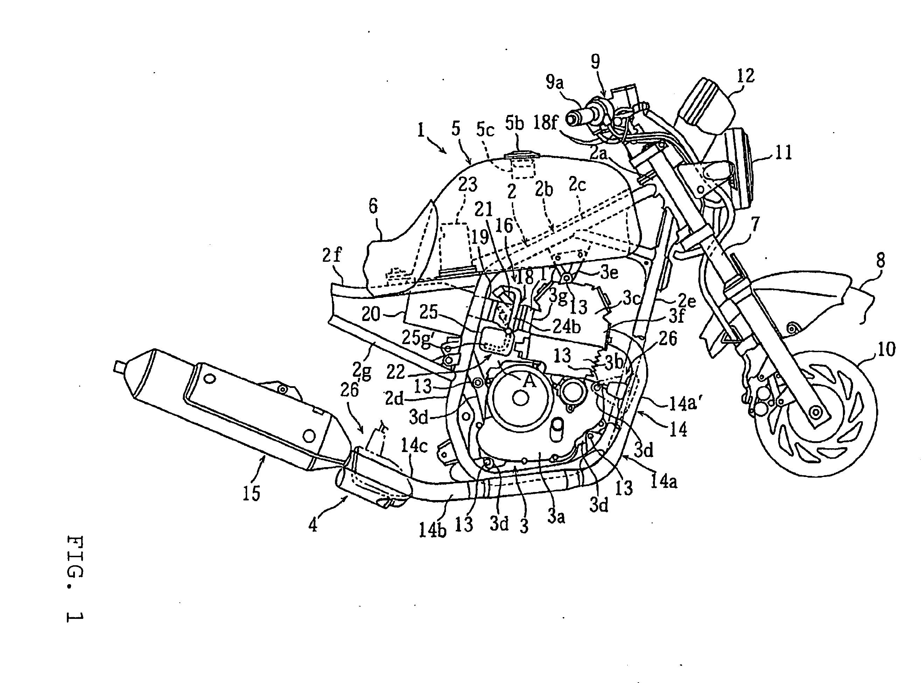

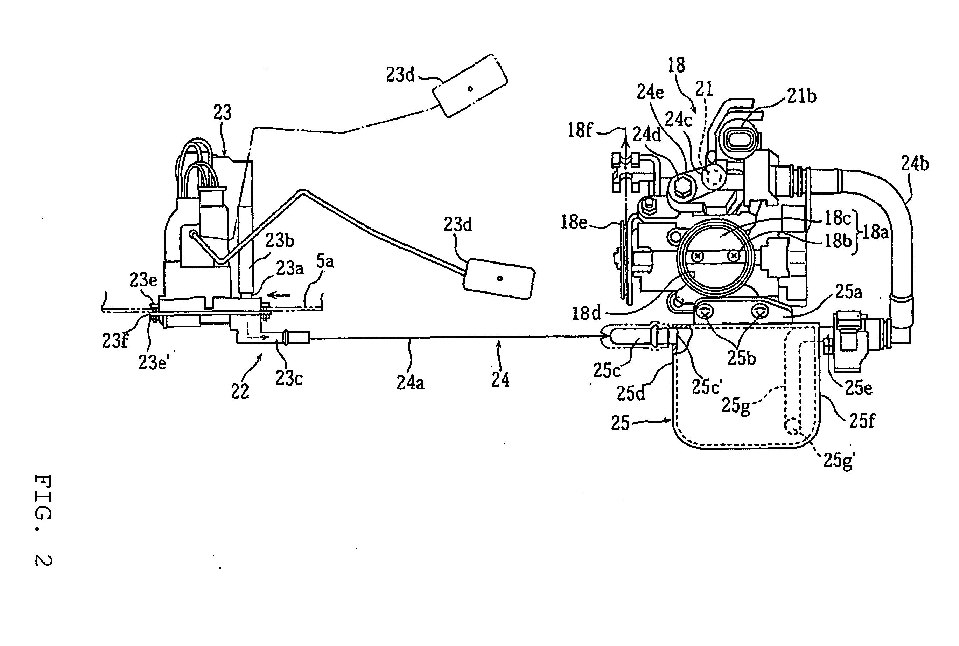

FIGs. 1 through 7 are illustrations for describing a motorcycle provided with an arrangement structure of an exhaust gas sensor according to an embodiment. The terms "right," "left," "front," and "rear" used in this embodiment refer to the right, left, front, and rear sides viewed from a rider seated on the seat.

In the figures, reference numeral 1 denotes a motorcycle, which includes a body frame 2, an engine 3 mounted on the body frame 2, an exhaust device 4 connected to the front wall of the engine 3, a fuel tank 5 mounted on the body frame 2 to be located above the engine, and a seat 6 mounted in the rear of the fuel tank 5. Here, reference numeral 5b denotes a cap for opening and closing a filler opening 5c of the fuel tank 5.

In addition, a front fork 7 is supported by a head pipe 2a located at the front end of the body frame 2 to allow free steering motion from side to side, and a front wheel 8 is rotatably supported at the lower end of the front fork 7, while a steering handle bar 9 is fixed to the upper end. Here, reference numeral 10 denotes a disk plate for a braking device of the front wheel, reference numeral 11 a headlight, and reference numeral 12 a speedometer.

The body frame 2 has a main frame 2b which is of a so-called "double-cradle" type. The main frame 2b has a tank rail part 2c extending slantingly downward to the rear from the upper end of the head pipe 2a, a rear arm bracket part 2d extending downward from the rear end of the tail rail part 2c, and a down tube part 2e extending downward from the lower part of the head pipe 2a and then farther extending rearward in the generally horizontal direction until it is joined to the lower end of the rear arm bracket 2d. A seat rail 2f is extending rearward from the connecting point of the tank rail part 2c and the rear arm bracket part 2d, and the rear end of the seat rail 2f is connected with the midway point of the rear arm bracket part 2d by a back stay 2g.

The engine 3 is mounted inside the main frame 2b of the body frame 2. The engine 3 is an air-cooled, four-cycle, single cylinder engine, having a general structure that a cylinder body 3b and a cylinder head 3c are built up on and joined to the top of a crankcase 3a. A boss portion 3d on the crankcase 3a and a boss portion 3e on the cylinder head 3c are fastened to the main frame 2b by bolts 13.

The exhaust device 4 is provided with an exhaust pipe 14 connected to an exhaust port 3f in the front wall of the cylinder head 3c, and a muffler (silencer) 15 connected to the rear end of the exhaust pipe 14. The exhaust pipe 14 has an upstream side higher level pipe section 14a bending downward to the front between the right and the left down tube parts 2e, 2e from the exhaust port 3f and extending downward, a lowest level pipe section 14b extending horizontally in general to the rear from the lower end of the upstream side higher level pipe section 14a, and a downstream side higher level pipe section 14c extending slantingly upward to the rear from the read end of the lowest level pipe section 14b. Note that the lowest level pipe section 14b is disposed to run along the external right side face of the down tube part 2e where it extends horizontally in general below the engine 3.

An intake system 16 is connected to the rear wall of the cylinder head 3c. The intake system 16 has a throttle body 18 connected to an intake port 3g in the rear wall mentioned above via a joint member 17, and an air cleaner 20 connected to the throttle body 18 via an air duct 19.

The throttle body 18 contains a throttle valve 18a. The throttle valve 18a, formed inside the throttle body 18, controls the passage area of an intake passage 18d communicating with the intake port 3g via the joint member 17. The throttle valve 18a has a construction with a disc-shaped valve plate 18c fixed to the valve shaft 18b in the intake passage 18d. A pulley 18e fixed at the external end of the valve shaft 18b is connected to a throttle grip 9a on the steering handle 9 by means of a throttle cable 18f.

In addition, a fuel injection valve 21 is inserted and fixed to the upper wall of the throttle body 18. The fuel injection valve 21 is disposed to inject the fuel toward the back side of the valve head of the intake valve that opens and closes the opening at the combustion chamber end of the intake port 3g.

Further, the motorcycle according to this embodiment is provided with fuel supply device 22 that delivers the fuel to the fuel injection valve 21. The fuel supply device 22 includes the fuel tank 5, a fuel pump 23 disposed inside the fuel tank 5, a high pressure piping 24 communicating a discharge port 23c of the fuel pump 23 with the fuel injection valve 21, and an auxiliary tank 25 interposed in the midway point of the high pressure piping 24 and serving as a fuel reservoir in the present invention.

The fuel pump 23 is of a type that contains a pressure regulator, which draws in the fuel via a filter 23b from the intake port 23a formed near the bottom, and discharge the fuel from the discharge port 23c after pressurizing the fuel to the discharge pressure corresponding to the injection pressure of the fuel injection valve 21. The fuel pump 23 is inserted into the tank through an opening formed in a bottom wall 5a of the fuel tank 5, and a flange part 23f of the fuel pump 23 is fastened by means of bolts 23e and nuts 23e' implanted in the bottom wall 5a. Here, reference numeral 23d denotes a float for detecting the oil level in the fuel tank. The fuel pump 23 is fixed to the bottom wall 5a of the fuel tank 5 by fastening the bolts, and the discharge port 23c projects downward relative to the bottom wall 5a.

The auxiliary tank 25 has a capacity of 10% to 40% of the engine displacement, or 0.2 to 3 % of the capacity of the fuel tank 5, and takes a form of sealed box made of resin or metal having a pressure resistance equivalent to that of the high pressure piping 24. For reference, any surface treatment is applied to the inner surface of the auxiliary tank 25 to prevent corrosion caused by the alcohol contained in the fuel.

Also, a mounting bracket 25a is formed on the auxiliary tank 25. The mounting bracket 25a is mounted to the bottom part of the throttle body 18 by means of bolts 25b. Thus, the auxiliary tank 25 is located in a space "A" between the throttle body 18 and the top surface of the crankcase 3a.

In addition, a fuel inflow pipe 25c of the auxiliary tank 25 is connected to a left side wall 25d, while a fuel outflow pipe 25e is connected to a right side wall 25f. Further, an inner extension part 25g is formed to the fuel outflow pipe 25e. An opening 25g' of the inner extension part 25g is disposed substantially apart from an opening 25c' of the fuel inflow pipe 25c. In other words, the inner extension part 25g constitutes a flow passage extension structure that makes the fuel flow path length "L" longer than the linear distance from the fuel inlet to the outlet "L'."

The high pressure piping 24 has an upstream piping 24a for connecting the discharge port 23c of the fuel pump 23 with the fuel inflow pipe 25c of the auxiliary tank 25, and a downstream piping 24b for connecting the fuel outflow pipe 25e of the auxiliary tank 25 with the fuel injection valve 21. A connecter 24c is joined to the downstream end of the downstream part piping 24b. The connecter 24c is fitted in the fuel inflow opening of the fuel injection valve 21, and a flange part 24e of the connector 24c is fastened to the top wall of the throttle body 18 by means of a bolt 24e. Here, reference numeral 21b denotes a connector for connecting a power supply to the fuel injection valve 21.

Also, an exhaust gas sensor 26 for detecting the properties of the exhaust gas is disposed in the exhaust device 4. Specifically, the exhaust gas sensor 26 is an O₂ sensor for detecting the oxygen concentration in the exhaust gas, and is disposed on the upstream side higher level pipe section 14a located higher than and upstream of the lowest level pipe section 14b of the exhaust pipe 14.

More particularly, the upstream side higher level pipe section 14a has a vertical pipe section 14a' disposed between the right and left down tube parts 2e, 2e but deflected a little toward the down tube 2e on the right, and extending vertically along the down tube part 2e. The exhaust gas sensor 26 is disposed on the vertical pipe section 14a' or disposed in the proximity of the exhaust port 3f. Further specifically, the exhaust gas sensor 26 is disposed so that, in the cross-sectional plan view, the axis line C2 of the exhaust gas sensor 26 orthogonally crosses the axis line C1 of the vertical pipe section 14a' , and is inclined toward the left rear relative to the plane "D" extending in the vehicle-width direction and containing the axis line C1.

The exhaust gas sensor 26 includes a sensor body 26b having a detecting part 26a and a cover 26c for enclosing the sensor body 26b. The sensor body 26b is screwed into a boss portion 14d formed on the upstream side higher level pipe section 14a, and the cover 26c is also fastened to the boss portion 14d at its flange part 26d by means of bolts 26e.

In the case of the motorcycle 1 of this embodiment, the fuels composed of gasoline only and ethanol only can be used. Also, the composite fuels of gasoline and ethanol at any mixing ratio can be used. Then, O₂ feedback control is performed, which controls the amount of fuel injection based on the output of the exhaust gas sensor 26 to achieve the engine operation at stoichiometric fuel-air ratio. The fuel composition is learned based on the controlled amount described above, and the fuel injection is carried out according to the results of the learning even when the O₂ feedback control is not performed. Consequently, the engine can be started and operated even when the fuel composition is altered.

On the other hand, conventional devices had a possible risk that the O₂ feedback control as described above cannot catch up with the drastic change in the fuel composition once the tank is filled with the fuel of different composition from the previous one while the fuel level in the tank is low.

To deal with this issue, the auxiliary tank 25 serving as a fuel reservoir is provided between the fuel tank 5 and the fuel injection valve 21 in this embodiment, so that two different fuels are mixed slowly even when the tank is filled with the fuel of different composition from the previous one, which in turn can avoid the drastic change from the previous type of fuel to the different type of fuel that is delivered to the fuel injection valve 21, thus allowing the O₂ feedback control to catch up with the control operation without using larger control gain.

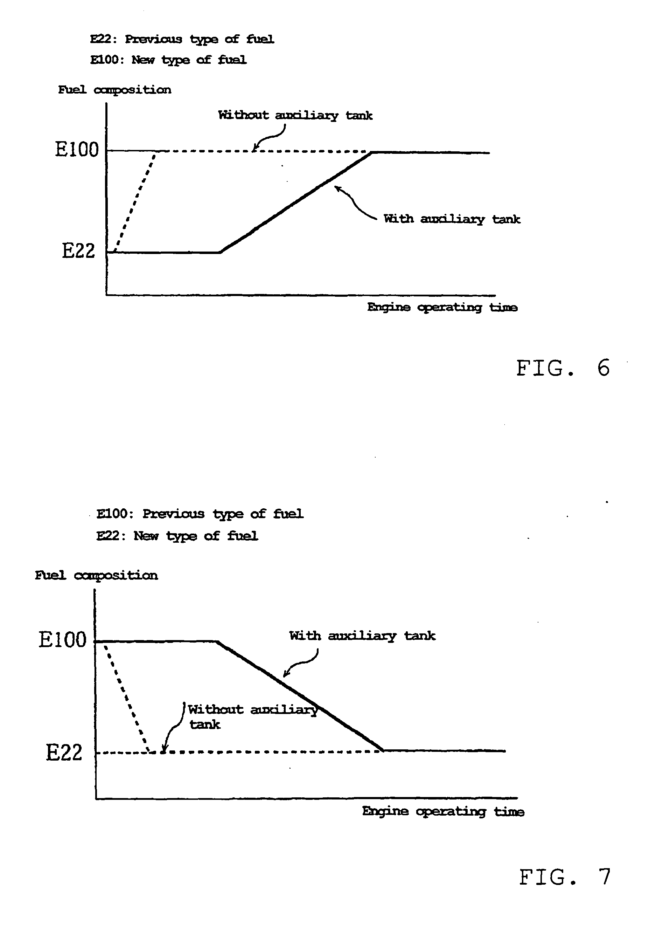

For instance, as shown in FIG. 6 in the case where a previous type of fuel E22 (ethanol 22%, gasoline 78%) was changed to a new type of fuel E100 (ethanol 100%), or alternatively as shown in FIG. 7, the previous type of fuel E100 was changed to the new type of fuel E22, the two types of fuel are mixed gradually within the auxiliary tank 25 as indicated with the solid line in both FIGs., and the O₂ feedback control can catch up with such change in the fuel, avoiding the malfunction of the engine. For reference, in the case where the auxiliary tank is not provided, the two types of fuels are mixed rapidly, and the O₂ feedback control cannot catch up with the change in the fuel, resulting in the possible engine malfunction.

In addition, when providing the auxiliary tank 25, the mixture of the previous type of fuel with the new type of fuel takes place even more slowly, since the auxiliary tank 25 is provided in the midway point of the high pressure piping 24 which is the fuel supply passage connecting the fuel pump 23 to the fuel injection valve 21, thus it is even easier for the O₂ feedback control to catch up with the change in the fuel. Namely, when the tank was filled with the new type of fuel, the two types of fuels virtually do not mix up even after a long time, unless the fuel pump is activated. Then, as the fuel pump is activated, the two types of fuels mix up gradually.

Further, since the auxiliary tank 25 is disposed in the midway point of the high pressure piping 24, the effect is achieved that the pulsation of the high pressure fuel coming from the fuel pump 23 is absorbed by the auxiliary tank 25.

Still further, since the auxiliary tank 25 is disposed in the space "A" between the throttle body 18 and the crankcase 3a, the layout space for the auxiliary tank 25 with relatively larger capacity can be secured easily. That is, a float chamber was disposed between the throttle body 18 and the upper surface of the crankcase 3a in the case of conventional carburetor type engine. In this embodiment, the fuel injection type engine is employed and the dead space is created because the float chamber is not necessary any more. The auxiliary tank 25 can be disposed easily by utilizing this dead space.

Also, the flow passage extension structure that makes the fuel flow passage length "L" longer than the linear distance "L' " from the fuel inlet to the outlet is employed inside the auxiliary tank 25. Both types of fuels can mix even more slowly by this structure. That is, the inner extension part 25g is formed to the fuel outflow pipe 25e, and the opening 25g' of the inner extension part 25g is disposed substantially apart from the opening 25c' of the fuel inflow pipe 25c. Thus, the fuel passage length "L" is extended, allowing the two types of fuels to be mixed effectively utilizing the capacity of the auxiliary tank 25. For reference, if the inner extension part 25g is not provided, the fuel flowing-in from the fuel inflow pipe 25c tends to flow linearly toward the fuel outflow pipe 25e, and the capacity of the auxiliary tank 25 may not be utilized effectively.

In addition, since the exhaust gas sensor 26 is disposed on the upstream side higher level pipe section 14a located higher than the lowest level pipe section 14b that defines the lowest part of the exhaust pipe 14, the water accumulated in the lowest level pipe section 14b is prevented from directly splashing onto the exhaust gas sensor 26. Especially when the engine is started with the exhaust gas sensor 26 being pre-heated, the splashing of the water onto the exhaust gas sensor 26 can be prevented accordingly, which in turn can prevent the damage to the exhaust gas sensor 26 caused by the heat shock.

Further, since the exhaust gas sensor 26 is disposed on the upstream side higher level pipe section 14a located higher than and upstream of the accumulated water, the splashing of water can be prevented even more positively, which in turn can prevent the heat shock.

More specifically, since the exhaust gas sensor 26 is disposed on the vertical pipe section 14a' located between the right and left down tube parts 2e, 2e, the exhaust gas sensor 26 is protected from the shock in motorcycle rollover, for instance. Also in this case, the exhaust gas sensor 26 is disposed to be inclined toward the left rear, taking advantage of the fact that the vertical pipe section 14a' is deflected a little toward the down tube 2e on the right, thus the layout space can be secured easily.

Since the exhaust gas sensor 26 is disposed so that the axis line C2 of the detecting part 26a of the exhaust gas sensor orthogonally crosses the axis line C1 of the exhaust pipe, higher accuracy can be attained in the detection of exhaust gas properties. That is, being disposed as described above, the exhaust gas can more easily enter inside through an aperture 26f formed in the detecting part 26a of the sensor body 26b, which in turn results in higher detecting accuracy as the exhaust gas comes into contact positively with the detecting part 26a.

In addition, the exhaust gas sensor 26 is disposed on the vertical pipe section 14a' to be close to the exhaust port 3f, which allows the exhaust gas to reach the exhaust gas sensor 26 at a high temperature. Therefore, the exhaust gas sensor 26 can be activated in a short time and the 02 feedback control can be performed at an early stage after starting the engine.

Here, in the embodiment described above, the exhaust gas sensor 26 is disposed in the position closer to the engine, that is, on the upstream side higher level pipe section 14a located upstream of the lowest level pipe section 14b, but as a modification example is shown by the alternate long and two short dashes line in FIG. 1, an exhaust gas sensor 26' may be disposed in the position farther from the engine, that is, on the downstream side higher level pipe section 14c located downstream of the lowest level pipe section 14b.

In the case of such arrangement, the exhaust gas sensor 26' is remote from the engine, and therefore will not be damaged by the heat from the engine to allow a longer life. Further, in the embodiment and the modification example, the case in which the exhaust gas sensors 26 and 26' are disposed on the upstream side higher level pipe section 14a and on the downstream side higher level pipe section 14c located on the higher level than the lowest level pipe section 14b is described to exemplify the exhaust gas sensor 26 and 26' being disposed in the higher position than the lowest part of the exhaust pipe 14. However, "being disposed in the higher position than the lowest part of the exhaust pipe" according to the present invention also includes the case in which the exhaust gas sensors 26 and 26' are disposed higher than the water-accumulating bottom surface inside of the lowest level pipe section 14b, namely on the upper wall surface of the lowest level pipe section 14b.

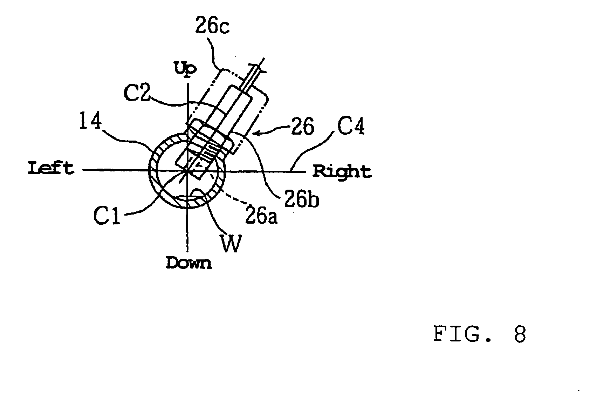

Specifically, as shown in FIG. 8, the exhaust gas sensor 26 can be disposed in the upper part relative to the horizontal line C4 passing through the axis line C1 of the exhaust pipe' 14. In such arrangement, the water W accumulated in the bottom part of the exhaust pipe 14 has little possibility of splashing onto the detecting part 26a, thus the suppressing effect for the heat shock is achieved.

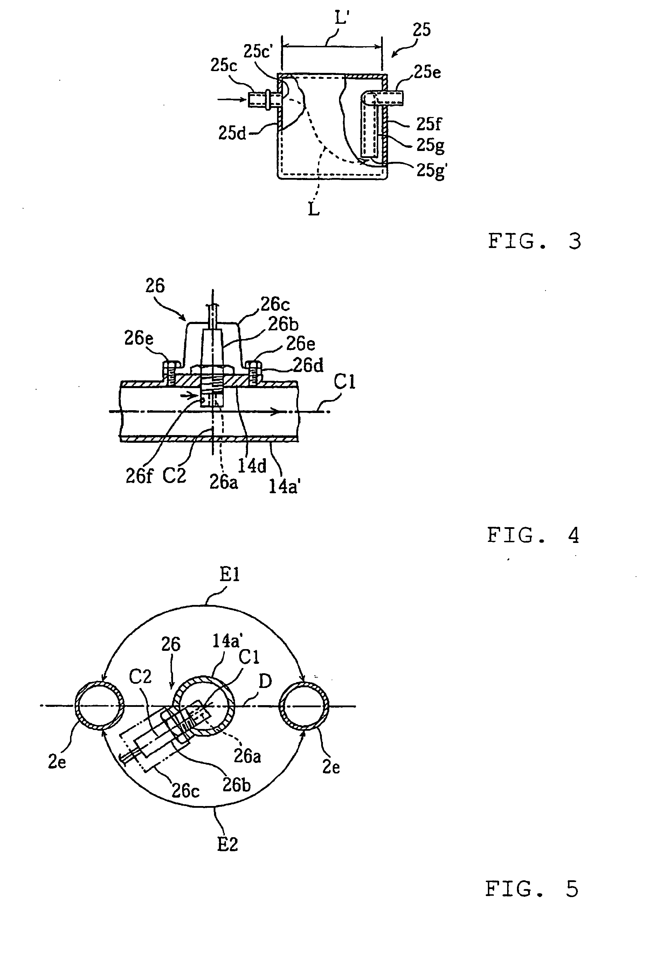

Also, in regard to the location of the exhaust gas sensor 26, it is not limited to the configuration of the embodiment, but as shown in FIG. 5, the exhaust gas sensor 26 can be disposed in the areas E1 and E2 in which the exhaust gas sensor 26 is inclined forward or rearward relative to the plane "D" extending in the vehicle-width direction containing the axis line C1 of the vertical pipe section 14a'.

In addition, the embodiments above exemplifies the case in which the exhaust gas sensor is disposed on the vertical pipe section of the exhaust pipe running along the down tube part, however, the vertical pipe section according to the present invention is not limited to the one disposed to run along the down tube part. The exhaust gas sensor may be disposed on the vertical pipe section provided in the rear part of the motorcycle body in the upwardly rising manner, for instance.

### DESCRIPTION OF REFERENCE NUMERALS AND SYMBOLS

- 1:: motorcycle
- 2:: body frame
- 2e:: down tube part
- 3:: engine
- 4:: exhaust device
- 14:: exhaust pipe
- 14a:: upstream side higher level pipe section
- 14a':: vertical pipe section
- 14b:: lowest level pipe section (lowest part of the exhaust pipe)
- 14c:: downstream side higher level pipe section
- 26:: exhaust gas sensor
- 26a:: detecting part
- 45a:: bulkhead (flow passage extension structure)
- C1:: axis line of exhaust pipe (axis line of vertical pipe section)
- C2:: axis line of detecting part
- D:: plane extending in vehicle-width direction including axis line of vertical pipe section

## Claims

1. A motorcycle (1) comprising:
a body frame (2), an engine (3) mounted to the body frame, and an exhaust device (4) connected to the engine,
wherein the engine is configured for operation with different types of fuels, the exhaust device has an exhaust pipe (14) connected to the engine and extending rearward, the exhaust pipe having a vertical pipe section (14a') extending in the vertical direction, an exhaust gas sensor (26) is disposed in the exhaust pipe for detecting the properties of the exhaust gas to identify the type of fuel, and the exhaust gas sensor is disposed in the vertical pipe section at a higher position than a lowest part of the exhaust pipe.

2. The motorcycle of Claim 1, wherein the exhaust pipe has a lowest level pipe section located in the lowest part and a higher level pipe section located in a higher part than the lowest level pipe section, and the exhaust gas sensor is disposed in the higher level pipe section.

3. The motorcycle of Claim 2, wherein the exhaust gas sensor is disposed in an upstream side higher level pipe section located upstream of the lowest level pipe section of the exhaust pipe.

4. The motorcycle of Claim 2, wherein the exhaust gas sensor is disposed in a downstream side higher level pipe section located downstream of the lowest level pipe section of the exhaust pipe.

5. The motorcycle of any preceding Claim, wherein the exhaust gas sensor is disposed so that a detecting part of the exhaust gas sensor is located higher than the axis line of the exhaust pipe.

6. The motorcycle of any one of the preceding claims, wherein the vertical pipe section is disposed to run along a down tube part of the body frame, extending vertically in front of the engine.

7. The motorcycle of Claim 6, wherein the vertical pipe section is disposed between right and left down tube parts of the body frame extending vertically in front of the engine and to run along the right and the left down tube parts, and the exhaust gas sensor is disposed to be inclined forward or rearward relative to a plane extending in the vehicle-width direction and containing the axis line of the vertical pipe section.

8. The motorcycle of any one of Claims 1 through 7, wherein the exhaust gas sensor is disposed so that the axis line of the detecting part of the exhaust gas sensor orthogonally crosses the axis line of the exhaust pipe.

## Patentansprüche

1. Motorrad mit:
einem Rahmen (2), einem Motor (3), der in den Rahmen montiert ist, und eine Auspuffeinrichtung (4), die mit dem Motor verbunden ist,
wobei der Motor für den Betrieb mit verschiedenen Kraftstoffarten eingerichtet ist und die Auspuffeinrichtung ein Auspuffrohr (4) aufweist, das mit dem Motor verbunden ist und sich in Richtung des Hecks erstreckt, wobei das Auspuffrohr einen vertikalen Rohrabschnitt(14a') aufweist, der sich in vertikaler Richtung erstreckt, wobei ein Abgassensor (26) in dem Abgasrohr zum Erfassen der Eigenschaften des Abgases angeordnet ist, um die Kraftstoffart zu ermitteln, und der Abgassensor in dem vertikalen Rohrabschnitt in einer höheren Position als der unterste Teil des Auspuffrohres angeordnet ist

2. Motorrad nach Anspruch 1, bei dem das Abgasrohr einen Rohrabschnitt in niedrigster Höhenposition aufweist, der in dem untersten Teil angeordnet ist, und einen Rohrabschnitt in höherer Position aufweist, der in einem höherliegenden Teil als der Rohrabschnitt in niedrigster Höhenposition angeordnet ist, und bei dem der Abgassensor in dem Rohrabschnitt in höherer Position angeordnet ist.

3. Motorrad nach Anspruch 2, bei dem der Abgassensor in einem Rohrabschnitt in höherer Position auf einer stromaufwärts liegenden Seite angeordnet ist, der stromaufwärts von dem Rohrabschnitt in niedrigster Höhenposition des Auspuffrohres angeordnet ist.

4. Motorrad nach Anspruch 2, bei dem der Abgassensor in einem Rohrabschnitt in höherer Position auf einer stromabwärts liegenden Seite angeordnet ist, die stromabwärts von dem Rohrabschnitt in niedrigster Höhenposition des Auspuffrohres angeordnet ist.

5. Motorrad nach einem der vorangehenden Ansprüche, bei dem der Abgassensor derart angeordnet ist, dass ein Detektorbauteil des Abgassensors oberhalb der Mittellinie des Abgasrohrs-angeordnet ist.

6. Motorrad nach einem der vorangehenden Ansprüche, bei dem der vertikale Rohrabschnitt derart angeordnet ist, dass er entlang eines abwärts verlaufenden Rohrteils des Rahmens verläuft, der sich vertikal vor dem Motor erstreckt.

7. Motorrad nach Anspruch 6, bei dem der vertikale Rohrabschnitt zwischen einem rechten und einem linken abwärts verlaufenden Rohrteil des Rahmens angeordnet ist, die sich senkrecht vor dem Motor erstrecken, und entlang dem rechten und dem linken abwärts verlaufenden Rohrteil verläuft, und der Abgassensor in Bezug auf eine Ebene, die sich in Richtung der Fahrzeugbreite erstreckt und die Mittellinie des vertikalen Rohrabschnitts enthält, vorwärts oder rückwärts geneigt ist.

8. Motorrad nach einem der Ansprüche 1 bis 7, bei dem der Abgassensor derart angeordnet ist, dass die Mittellinie des Detektorbauteils des Abgassensors die Mittellinie des Abgasrohrs senkrecht kreuzt.

## Revendications

1. Motocyclette (1) comprenant:
une ossature (2), un moteur (3) monté sur l'ossature, et un dispositif d'échappement (4) raccordé au moteur,
dans laquelle le moteur est configuré pour fonctionner avec différents types de carburants, le dispositif d'échappement a un tuyau d'échappement (14) raccordé au moteur et s'étendant vers l'arrière, le tuyau d'échappement ayant une section verticale de tuyau (14a') s'étendant dans la direction verticale, une sonde d'oxygène des gaz d'échappement (26) est disposée dans le tuyau d'échappement pour détecter les propriétés des gaz d'échappement afin d'identifier le type de carburant, et la sonde d'oxygène des gaz d'échappement est disposée dans la section verticale de tuyau dans une position plus haute qu'une partie inférieure du tuyau d'échappement.

2. Motocyclette selon la revendication 1, dans laquelle le tuyau d'échappement comprend une section de tuyau de niveau inférieur située dans la partie inférieure et une section de tuyau de niveau supérieur située dans une partie plus haute que la section de tuyau de niveau inférieur, et la sonde d'oxygène des gaz d'échappement est disposée dans la section de tuyau de niveau supérieur.

3. Motocyclette selon la revendication 2, dans laquelle la sonde d'oxygène des gaz d'échappement est disposée dans une section de tuyau de niveau supérieur amont située en amont de la section de tuyau de niveau inférieur du tuyau d'échappement.

4. Motocyclette selon la revendication 2, dans laquelle la sonde d'oxygène des gaz d'échappement est disposée dans une section de tuyau de niveau supérieur aval située en aval de la section de tuyau de niveau inférieur du tuyau d'échappement.

5. Motocyclette selon l'une quelconque des revendications précédentes, dans laquelle la sonde d'oxygène des gaz d'échappement est disposée de sorte qu'une partie de détection de la sonde d'oxygène des gaz d'échappement se trouve à un niveau plus haut que l'axe du tuyau d'échappement.

6. Motocyclette selon l'une quelconque des revendications précédentes, dans laquelle la section verticale de tuyau est disposée de manière à passer le long d'une partie de tube diagonal de l'ossature, s'étendant verticalement devant le moteur.

7. Motocyclette selon la revendication 6, dans laquelle la section verticale de tuyau est disposée entre les parties droite et gauche de tube diagonal de l'ossature s'étendant verticalement devant le moteur et passe le long des parties droite et gauche de tube diagonal, et la sonde d'oxygène des gaz d'échappement est disposée de manière à être inclinée vers l'avant ou vers l'arrière par rapport à un plan s'étendant dans le sens de la largeur du véhicule et contenant l'axe de la section verticale de tuyau.

8. Motocyclette selon l'une quelconque des revendications 1 à 7, dans laquelle la sonde d'oxygène des gaz d'échappement est disposée de manière que l'axe de la partie de détection de la sonde d'oxygène des gaz d'échappement coupe orthogonalement l'axe du tuyau d'échappement.
